(19) Europäisches Patentamt
European Patent Office
Office européen des brevets

(11) **EP 2 584 451 A2**

(12) **EUROPEAN PATENT APPLICATION**

(43) Date of publication:
**24.04.2013 Bulletin 2013/17**

(51) Int Cl.:
***G06F 3/0484*** *(2013.01)*　***H04N 7/26*** *(2006.01)*

(21) Application number: **12161061.2**

(22) Date of filing: **23.03.2012**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **18.10.2011　TW 100137707**<br><br>(71) Applicant: **Acer Incorporated<br>New Taipei City 221 (TW)** | (72) Inventors:<br>• **Huang, Shih-Chia<br>221 New Taipei City (TW)**<br>• **Jiau, Ming-Kai<br>221 New Taipei City (TW)**<br>• **Kuo, Sy-Yen<br>221 New Taipei City (TW)**<br><br>(74) Representative: **Chamberlain, Alan James<br>Haseltine Lake LLP<br>Redcliff Quay<br>120 Redcliff Street<br>Bristol BS1 6HU (GB)** |

(54) **Method for adjusting video image compression using gesture**

(57)　A method for adjusting video image compression using a gesture, adapted to compress a video image displayed by an electronic device having a touch screen, is provided. In the method, a video image is displayed on the touch screen. Next, a first touch operation executed by a user on the video image is detected by using the touch screen, and a region of interest (ROI) and a non-ROI in the video image are determined according to the first touch operation. Then, compression methods for the ROI and the non-ROI are adjusted and used to compress the video image in the ROI and the non-ROI.

Display a video image on the touch screen — S102

Detect a touch operation executed on the video image by using the touch screen, and determine an ROI and a non-ROI according to the touch operation — S104

Adjust the compression methods for the ROI and the non-ROI, and use the adjusted compression methods for compressing the video image in the ROI and the non-ROI — S106

FIG. 1

EP 2 584 451 A2

**Description**

CROSS-REFERENCE TO RELATED APPLICATION

This application claims the priority benefit of Taiwan application serial no. 100137707, filed on October 18, 2011. The entirety of the above-mentioned patent application is hereby incorporated by reference herein and made a part of this specification.

BACKGROUND OF THE INVENTION

1. Field of the Invention

The present invention generally relates to an image compression method, in particular, to a method for adjusting video image compression using a gesture.

2. Description of Related Art

With development of network communication techniques, currently people have video meetings with a plurality of persons through web cameras connected through computers, or make a video call with other person through a camera lens on a mobile phone, so that the face-to-face communication method not only enables the distance between people to be shorter, but also reduces communication obstacles possibly existing in the conventional voice call.

However, application of the video call needs to transfer continuous video and audio data in a real-time method, and the required data transmission amount is quite large, which relatively occupies a great network bandwidth. Once the network bandwidth of the place where the people involved in the call is located is insufficient, the displayed video image may be delayed or the frame quality is deteriorated, which is the unacceptable result for the application of the video call having quite high requirements on the display quality and the voice quality.

Therefore, it is necessary to provide a technique capable of effectively reducing the data transmission amount of the video image under the situation of maintaining the definition of the video image, so that the video image may be smoothly played under various call environments.

SUMMARY OF THE INVENTION

Accordingly, the present invention is directed to a method for adjusting video image compression using a gesture, capable of decreasing a data transmission amount of a video image.

The present invention provides a method for adjusting video image compression using a gesture, adapted to compress a video image displayed by an electronic device having a touch screen. In the method, a video image is displayed on the touch screen. Next, a first touch operation executed by a user on the video image is detected by using the touch screen, and a region of interest (ROI) and a non-ROI in the video image are determined according to the first touch operation. Then, compression methods for the ROI and the non-ROI are adjusted and used to compress the video image in the ROI and the non-ROI.

In an embodiment of the present invention, before the step of displaying the video image, the method further includes receiving the video image captured by an image capturing device of the electronic device, or the video image transferred from a remote device.

In an embodiment of the present invention, after the step of determining the ROI and the non-ROI according to the first touch operation, the method further includes transferring position information of the ROI and the non-ROI to the remote device, and adjusting the compression methods for the ROI and the non-ROI by the remote device according to the position information, for compressing the video image in the ROI and the non-ROI; and transferring the compressed video image in the ROI and the non-ROI by the remote device to the electronic device.

In an embodiment of the present invention, the step of determining the ROI and the non-ROI according to the first touch operation includes when the first touch operation includes three touch points, determining a round region by using the three touch points, and dividing the video image into the ROI and the non-ROI by using the round region, in which a range of the round region covers the three touch points.

In an embodiment of the present invention, the step of dividing the video image into the ROI and the non-ROI by using the round region includes when the three touch points go inwards or outwards from an original position, determining to use the video image in the round region as the ROI and use the video image out of the round region as the non-ROI, or use the video image out of the round region as the ROI and use the video image in the round region as the non-ROI.

In an embodiment of the present invention, the step of determining the ROI and the non-ROI according to the first touch operation includes when the first touch operation includes four touch points, determining a quadrangular region by using the four touch points, and dividing the video image into the ROI and the non-ROI by using the quadrangular region.

In an embodiment of the present invention, the step of dividing the video image into the ROI and the non-ROI by using the quadrangular region includes when the four touch points go inwards or outwards from an original position, determining to use the video image in the quadrangular region as the ROI and use the video image out of the quadrangular region as the non-ROI, or use the video image out of the quadrangular region as the ROI and use the video image in the quadrangular region as the non-ROI.

In an embodiment of the present invention, after the step of determining the ROI and the non-ROI, the method further includes detecting a second touch operation in the ROI; and when the detected second touch operation is a single touch point, and the touch point moves after staying in the ROI for more than a preset period of time, moving a position of the ROI on the video image according to displacement of the touch point.

In an embodiment of the present invention, after the step of determining the ROI and the non-ROI, the method further includes detecting a third touch operation in the ROI; and when the detected third touch operation is two touch points, and the two touch points go inwards or outwards from an original position, scaling a size of the ROI according to displacement of the two touch points.

In an embodiment of the present invention, after the step of determining the ROI and the non-ROI, the method further includes detecting a fourth touch operation; and when the detected fourth touch operation is a single touch point, and the touch point moves from the outside of the ROI into the ROI and then moves out of the ROI, deleting the determined ROI and the determined non-ROI.

In an embodiment of the present invention, the step of adjusting the compression methods for the ROI and the non-ROI, for compressing the video image in the ROI and the non-ROI includes compressing the video image in the ROI by using a first compression method with a first quality; and compressing the video image in the non-ROI by using a second compression method with a second quality, in which the first quality is higher than the second quality.

In an embodiment of the present invention, when the video image in the ROI is compressed by using the first compression method, motion estimation is only executed on a plurality of frames of the video image in the ROI, and when the video image in the non-ROI is compressed by using the second compression method, the motion estimation is only executed on a plurality of frames of the video image in the non-ROI.

In an embodiment of the present invention, the step of adjusting the compression methods for the ROI and the non-ROI further includes when a plurality of touch points of the first touch operation goes inwards or outwards from an original position, detecting a touch pressure of each of the touch points; and defining the compression methods from the ROI to the non-ROI in a gradient manner according to the touch pressures of the touch points, so that a compression quality of the compressed video image is increasingly improved or deteriorated from the ROI to the non-ROI.

In an embodiment of the present invention, in the plurality of frames of the video image in the ROI, a difference value of the compression quality between a plurality of macroblocks (MBs) being adjacent in time or space is not greater than a unit quantized value.

In an embodiment of the present invention, the compression quality includes a quantization parameter (QP) value and/or a bit rate.

Based on the above mentioned, in the method for adjusting the video image compression using the gesture according to the present invention, the ROI and the non-ROI are determined through the gesture, image encoding with a high definition or being original is performed on the ROI, and image encoding with a low definition or being relatively simple is performed on the non-ROI, thereby decreasing an entire data amount of the video image, so that under an environment of insufficient network bandwidth, playing smoothness of the video image may still be maintained.

In order to make the aforementioned features and advantages of the present invention more comprehensible, embodiments accompanied with figures are described in detail below.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 shows a method for adjusting video image compression using a gesture according to an embodiment of the present invention.

FIG. 2A and FIG. 2B show a method for adjusting video image compression using a gesture according to an embodiment of the present invention.

FIG. 3A and FIG. 3B show a method for adjusting video image compression using a gesture according to an embodiment of the present invention.

FIG. 4 shows a method for adjusting video image compression using a gesture according to an embodiment of the present invention.

FIG. 5 shows a method for adjusting video image compression using a gesture according to an embodiment of the present invention.

FIG. 6 is a schematic view of adjacent MBs according to an embodiment of the present invention.

DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

In the present invention, an intuitive operation method of a touch screen is applied to selection and edition of an ROI of a user in a video image, the ROI is quickly determined according to an operation gesture of the user on the touch screen, and suitable compression methods are respectively used for the ROI and a non-ROI, so that an entire data amount of the video image is effectively decreased without affecting the user in viewing the content of the video image.

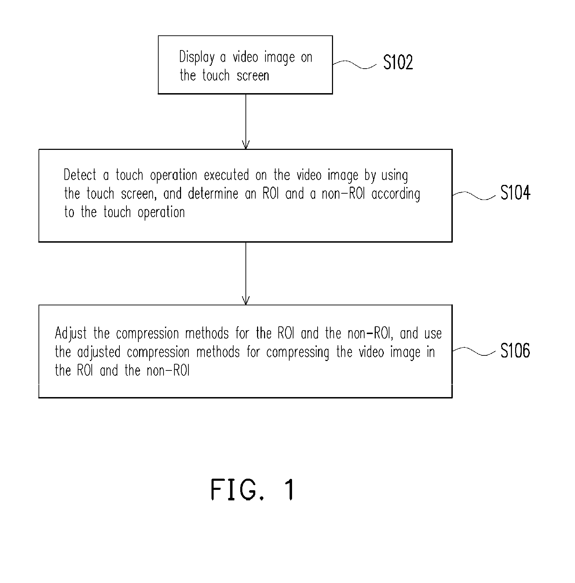

FIG. 1 shows a method for adjusting video image compression using a gesture according to an embodiment of the present invention. Referring to FIG. 1, the method of this embodiment is applicable to an electronic device having a touch screen. The electronic device is, for example, a mobile phone, a personal digital assistant, a tablet personal computer, a notebook computer, a desktop computer, and other devices, and is adapted to compress a video image displayed on the touch screen according to a gesture of a user. The method includes the following steps.

Firstly, the electronic device displays the video image on the touch screen thereof (Step S102). The video image is captured by an image capturing device, for example, a camera lens of the electronic device or a camera, or is transferred from a remote device through a network.

In detail, in addition to displaying a video image of an opposite party of a call on the screen, the application of the video call displays a video image of the caller. Therefore, in order to enable the video image to be smoothly played, in addition to compressing the video image of the opposite party of the call, the video image of the caller is compressed, so as to effectively reduce a data transmission amount of the video image.

In the video call, the sight line of the user mainly stops at the person of the opposite party of the call, and the objects and the background behind the person are relatively not important. Accordingly, in this embodiment, after displaying the video image, the electronic device detects a touch operation executed by the user on the video image by using the touch screen, and determines an ROI and a non-ROI according to the touch operation (Step S104). The touch operation includes, for example, a plurality of touch points, and the touch points are determined in a sequentially clicking method or in a simultaneously clicking manner, which is not limited here. If the user clicks a plurality of touch points continuously on the touch screen, and a time interval between two consecutive touch points does not exceed a preset period of time, the electronic device may serially connect the touch points and consider the touch points as being of a single touch operation, which are used by the electronic device to determine the ROI.

When the touch operation includes three touch points, the electronic device may, for example, determine a round region by using the three touch points, and divide the video image into the ROI and the non-ROI by using the round region, in which a range of the round region covers the three touch points. In detail, the electronic device may, for example, connect the three touch points to form a triangle, and draws a circle by using an excenter of the triangle as a center of the circle, and using a distance between the excenter and the touch point as a radius of the circle, here, the three touch points certainly fall on the circumference of the circle. In an embodiment, the electronic device directly uses the round region included in the circle as the ROI, and uses the region out of the round region and in the video image as the non-ROI.

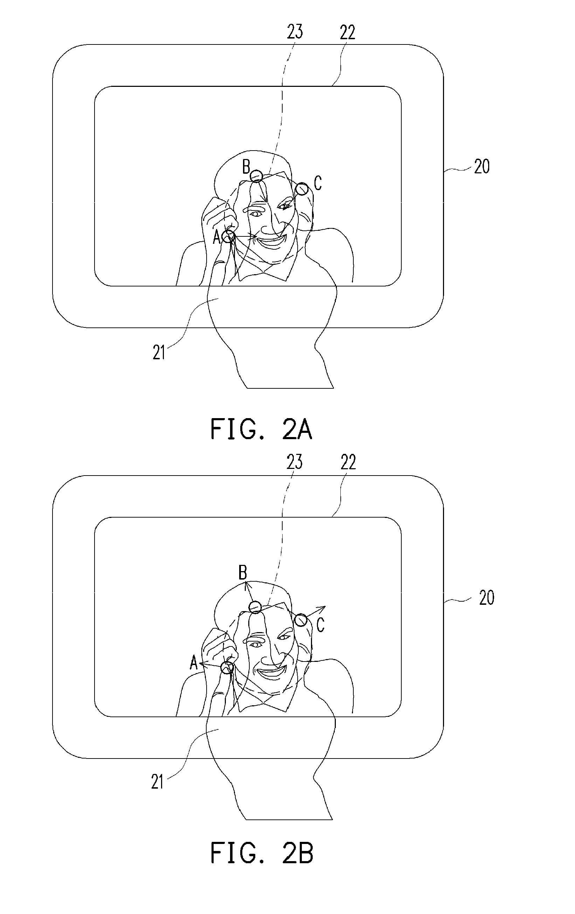

In another embodiment, the electronic device may determine to use the region in the round region or the region out of the round region as the ROI according to changes of the touch operation. For example, FIG. 2A and FIG. 2B show a method for adjusting video image compression using a gesture according to an embodiment of the present invention. Referring to FIG. 2A, an electronic device 20, for example, detects three touch points A, B, C touched by a user finger 21 on a touch screen 22, and displays a round region 23 on the touch screen 22 according to positions of the touch points A, B, C. Here, if judging that the three touch points A, B, C go inwards (that is, are dragged inwards) from an original position, the electronic device 20 determines to use the video image in the round region 23 as the ROI and use the video image out of the round region 23 as the non-ROI. Referring to FIG. 2B, if judging that the three touch points A, B, C go outwards (that is, are dragged outwards) from the original position, the electronic device determines to use the video image out of the round region 23 as the ROI and use the video image in the round region 23 as the non-ROI. The implementation method is only for exemplary description, and the electronic device may treat the operations that the touch points go inwards and outwards from the original position as the meanings opposite to those mentioned above, but the present invention is not limited thereto.

On the other hand, when the touch operation includes four touch points, the electronic device may, for example, determine a quadrangular region by using the four touch points, and divide the video image into the ROI and the non-ROI by using the quadrangular region, in which a range of the quadrangular region covers the four touch points. In detail, the electronic device may, for example, connect the four touch points to form a quadrangle. In an embodiment, the electronic device directly uses the quadrangular region covered by the quadrangle as the ROI, and uses the region out of the quadrangular region and in the video image as the non-ROI.

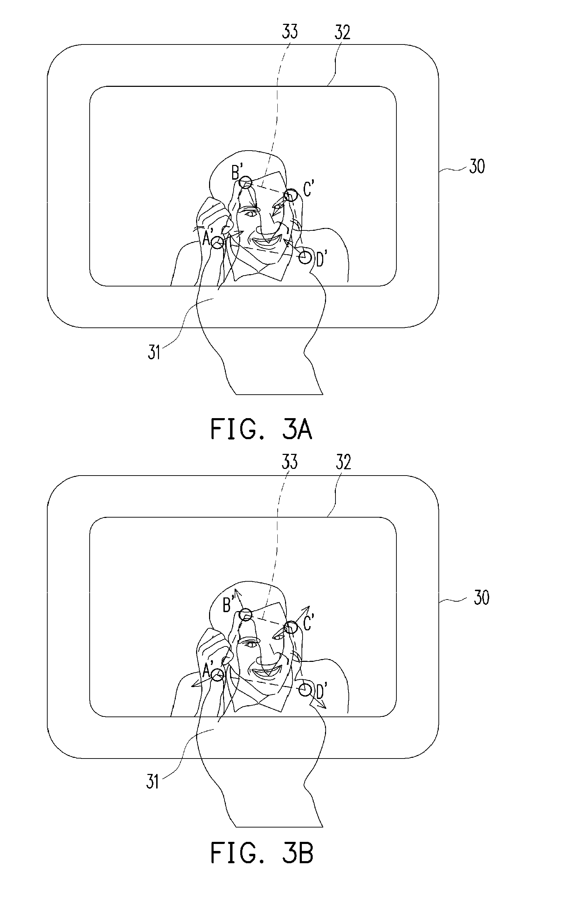

In another embodiment, the electronic device determines to use the region in the quadrangular region or the region out of the quadrangular region as the ROI according to changes of the touch operation. For example, FIG. 3A and FIG. 3B show a method for adjusting video image compression using a gesture according to an embodiment of the present invention. Referring to FIG. 3A, an electronic device 30, for example, detects four touch points A', B', C', D' touched by a user finger 31 on a touch screen 32, connects the four touch points A', B', C', D' to form a quadrangle according to positions of the four touch points, and displays a quadrangular region 33 on the touch screen 32. Here, if judging that the four touch points A', B', C', D' go inwards (that is, are dragged inwards) from an original position, the electronic device 30 determines to use the video image in the quadrangular region 33 as the ROI and use the video image out of the quadrangular region 33 as the non-ROI. Referring to FIG. 3B, if judging that the four touch points A', B', C', D' go outwards (that is, are dragged outwards) from the original position, the electronic device 30 determines to use the video image out of the quadrangular region 33 as the ROI and use the video image in the quadrangular region 33 as the non-ROI. The implementation method is only for exemplary description, and the electronic device may treat the operations that the touch points go inwards and outwards from the original position as the meanings opposite to those mentioned above, but the present invention is not limited thereto.

It should be noted that for the ROI generated through the gesture, in this embodiment, other gestures may be used together, so as to allow the user to add, delete, move, scale the ROI, so that the user may adjust the position and the size of the ROI in the most intuitive manner, thereby enabling the ROI to meet the demands of the user.

For adding of the ROI, after determining a group of the ROI and the non-ROI, the electronic device may continue to detect the touch operation of the user by using the touch screen. Similar to the determining method of the ROI, when the user executes another touch operation outside the ROI, the electronic device generates another round or quadrangular region accordingly, for determining another group of the ROI and the non-ROI. In an embodiment, the electronic device may further judge whether the newly added ROI overlaps the original ROI. If yes, for example, the added ROI may replace the original ROI, or may be combined with the original ROI to redefine the new ROI, or the data amount after compressing is further decreased for the non-ROI out of the two ROIs, but the present invention is not limited thereto.

For deleting of the ROI, after determining the ROI and the non-ROI, the electronic device continues to detect the touch operation of the user by using the touch screen. When the touch operation detected by the electronic device is a single touch point, and the touch point moves from the outside of the ROI into the ROI and then moves out of the ROI, the electronic device may delete the originally determined ROI and the originally determined non-ROI.

For moving of the ROI, after determining the ROI and the non-ROI, the electronic device continues to detect the touch operation of the user in the ROI by using the touch screen. When the touch operation is a single touch point, and the touch point moves after staying in the ROI for more than a preset period of time, the electronic device moves the position of the ROI on the video image according to displacement of the touch point. In an embodiment, the moved ROI may be, for example, defined to not overlap another ROI, so as to avoid repetition.

For scaling of the ROI, after determining the ROI and the non-ROI, the electronic device continues to detect the touch operation of the user in the ROI by using the touch screen. When the touch operation is two touch points, and the two touch points go inwards or outwards from the original position, the electronic device scales the size of the ROI according to the displacement of the two touch points. In brief, if the user makes a gesture of touching and dragging inwards by using two fingers on the touch screen, the electronic device may in equal proportion reduce the size of the ROI according to the displacement of the touch; if the user makes a gesture of touching and dragging outwards by using two fingers on the touch screen, the electronic device may in equal proportion enlarge the size of the ROI according to the displacement of the touch. For the round region formed by three-point touch, for example, according to the displacement of the touch, the length of the radius is increased or decreased according to the displacement of the touch; for the quadrangular region formed by four-point touch, for example, the length of the diagonal line is increased or decreased according to the displacement of the touch, but the present invention is not limited thereto.

After the ROI and the non-ROI are determined finally in the method, the electronic device may adjust the compression methods for the ROI and the non-ROI, and use the adjusted compression methods for compressing the video image in the ROI and the non-ROI (Step S106). The electronic device, for example, compresses the video image in the ROI by using a first compression method with a first quality, and compresses the video image in the non-ROI by using a second compression method with a second quality, in which the first quality is higher than the second quality.

In detail, a video call or a video meeting usually emphasizes on the person or the foreground in the frame, and the background or other regions are relatively not important. Therefore, this embodiment enables the user to select the key viewing region in a method of defining the ROI, and compress the region by using the compression method with the relatively high quality, so as to maintain the definition of the image in the region. Relatively, the region out of the ROI is compressed by using the compression method with the relatively low quality, so as to effectively decrease the entire data amount of the video image, so that the display of the video image may maintain certain smoothness when the network bandwidth is small.

It should be noted that during the process of image compression, the computation of motion estimation occupies a quite large proportion. The reason is that when the motion estimation is executed, it is necessary to search for the corresponding object in the entire image, and then calculate the motion vectors of the objects, so as to finish the motion estimation. Accordingly, in the aforementioned step, in this embodiment, the video image is already divided into the ROI and the non-ROI, so that for the motion estimation of the two regions, the search range may be reduced into a plurality of frames of the video image in the ROI or the plurality of frames of the video image in the non-ROI. Therefore, the computation amount of the motion estimation executed by the electronic device may be greatly decreased, thereby improving system performance.

The method analyzes and adjusts the video image displayed on the electronic device, and accordingly compresses the video image. The compressed video image may be transferred to the other party of the call through the network, so as to be displayed in front of the user of the other party. However, in another embodiment, after the user determines the ROI, the electronic device directly informs the remote device of the position information of the ROI, so as to control the remote device to execute the compression action of the video image in the ROI and the non-ROI, thereby providing the compressed video image for the electronic device. Another embodiment is given for detailed description in the following.

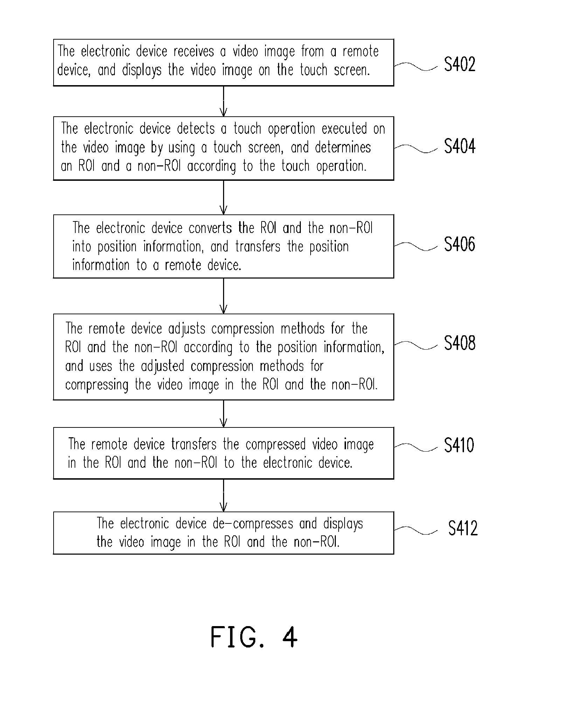

FIG. 4 shows a method for adjusting video image compression using a gesture according to an embodiment of the present invention. Referring to FIG. 4, the method of this embodiment is applicable to an electronic device having a touch screen, for example, connected to a remote device through a network, so as to display a video image transferred from the remote device on the touch screen. The steps are as follows.

Firstly, the electronic device receives the video image from the remote device, and displays the video image on the touch screen (Step S402). Next, the electronic device detects a touch operation executed by a user on the video image by using a touch screen, and determines an ROI and a non-ROI according to the touch operation (Step S404). The method of determining the ROI and the non-ROI is the same or similar to that in step S104 in the above embodiment, so the detailed content is not repeated here.

It is different from the above embodiment that in this embodiment, each time after determining the ROI and the non-ROI, for example, the electronic device converts the ROI and the non-ROI into the position information, and transfers the position information to the remote device (Step S406). The position information is, for example, a set of vertex coordinates of the ROI, but the present invention is not limited thereto.

After receiving the position information, the remote device restores the ROI and the non-ROI according to the position information, and accordingly adjusts compression methods for the ROI and the non-ROI, for compressing the video image in the ROI and the non-ROI (Step S408).

Finally, the remote device transfers the compressed video image in the ROI and the non-ROI to the electronic device (Step S410), and the electronic device de-compresses and displays the video image in the ROI and the non-ROI (Step S412).

Through the method, the entire data amount of the video image transferred from the remote device to the electronic device may be effectively decreased, so that the display of the video image on the electronic device may maintain certain smoothness when the network bandwidth is small.

It should be noted that in another embodiment, the electronic device of the present invention may determine to define the compression quality of the video image from the ROI to the non-ROI in a gradient manner according to a touch pressure of the user on the touch screen, so as to prevent a difference between the ROI and the non-ROI from being too distinct. Another embodiment is given for detailed description in the following.

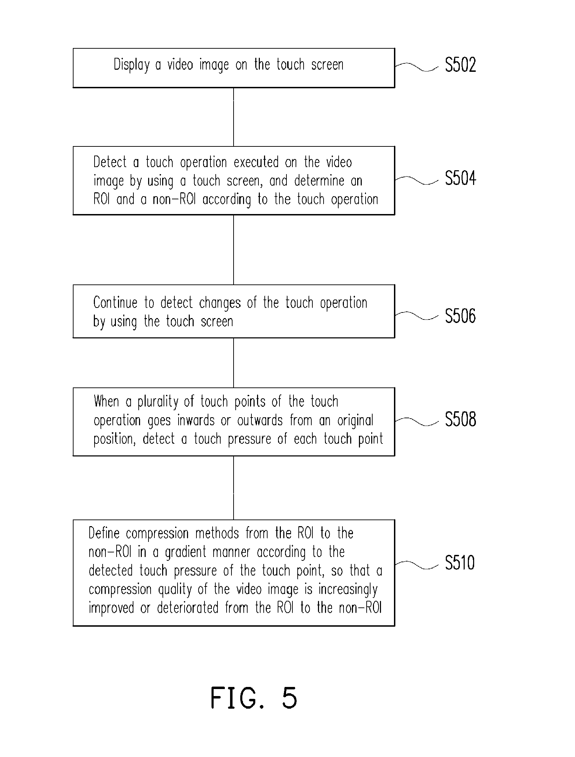

FIG. 5 shows a method for adjusting video image compression using a gesture according to an embodiment of the present invention. Referring to FIG. 5, the method of this embodiment is applicable to an electronic device having a touch screen, and is adapted to compress a video image displayed on the touch screen in a gradient manner according to a gesture of a user. The steps are as follows.

Firstly, the electronic device receives a video image from the remote device, and displays the video image on the touch screen (Step S502). Next, the electronic device detects a touch operation executed by a user on the video image by using a touch screen, and determines an ROI and a non-ROI according to the touch operation (Step S504). The method of determining the ROI and the non-ROI is the same or similar to that in step S104 in the above embodiment, so the detailed content is not repeated here.

It is different from the above embodiment that in this embodiment, after determining the ROI and the non-ROI, the electronic device continues to detect changes of the touch operation by using the touch screen (Step S506). When a plurality of touch points of the touch operation goes inwards or outwards from an original position, the electronic device detects a touch pressure of each touch point (Step S508), and then defines compression methods from the ROI to the non-ROI in a gradient manner according to the detected touch pressure of the touch point, so that a compression quality of the compressed video image is increasingly improved or deteriorated from the ROI to the non-ROI (Step S510).

In detail, a capacitance value of each touch point on the touch screen may be, for example, increased as the touch pressure or a touched surface area is increased. The electronic device of this embodiment judges the touch pressure of going outwards or inwards of the user finger according to the capacitance value of each touch point detected by the touch screen, and accordingly adjusts the compression methods from the ROI to the non-ROI in the gradient manner, so that the compression quality of the video image may be increasingly improved or deteriorated from the ROI to the non-ROI, so as to decrease the image difference of the two regions, thereby preventing the entire video image from seeming too abrupt.

For each MB in the ROI, the electronic device may, for example, increase or decrease a QP value of the MB according to the touch pressure detected on the MBs being adjacent in time, so that the QP value $QP(ref)$ of the MB of the reference frame $ref$ and the QP value $QP(i)$ of the MB of the current frame i have the following relation:

$$QP(i) = QP(ref) + sign(\phi - thr) \times \Delta Q$$

$\Delta Q$ is a pre-defined unit QP, $\varphi$ is a detected touch pressure value, and $thr$ is a pre-defined touch pressure threshold value.

In addition, the electronic device may, for example, increase or decrease a QP value according to the touch pressure detected on the MBs being adjacent in space, so that the QP value $QP(i)$ of the MB i in the current frame and the QP value $QP(j)$ of the adjacent MB $j$ in the current frame have the following relation:

$$QP(i) = QP(j) + sign(\phi - thr) \times \Delta Q$$

$\Delta Q$ is a pre-defined unit QP, $\varphi$ is a detected touch pressure value, and $thr$ is a pre-defined touch pressure threshold value.

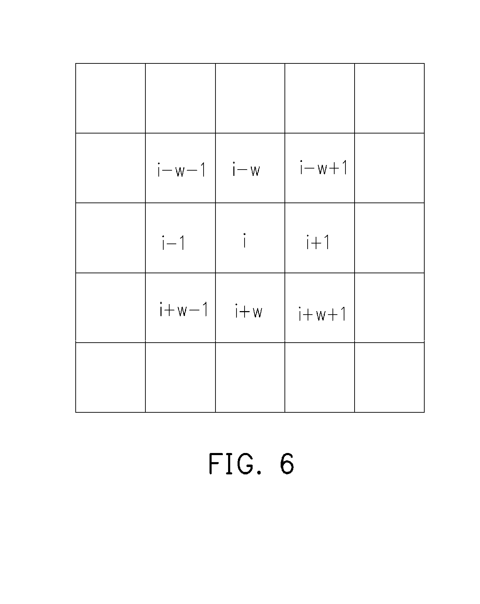

For example, FIG. 6 is a schematic view of adjacent MBs according to an embodiment of the present invention. It may be known from FIG. 6 that adjacent MBs of an MB i include an MB i-w-1, an MB i-w, an MB i-w+1, an MB i-1, an MB i+1, an MB i+w-1, an MB i+w, and an MB i+w+1. In this embodiment, a QP value of each MB is increased or decreased according to a touch pressure detected by an electronic device on the MB, and a difference value of the QP value between the MBs is enabled not to exceed a unit QP value $\Delta Q$.

It should be noted that in the embodiment, the QP is used as the adjusting object of the electronic device, however, in other embodiments, the electronic device may also adjust a bit rate, or adjust the QP value and the bit rate, but the present invention is not limited thereto.

To sum up, in the method for adjusting video image compression using the gesture according to the present invention, the ROI of the user is determined through the gesture with which the user touches the touch screen, so as to compress the view image in the ROI and the non-ROI by using different compression methods, so as to effectively decrease the data transmission amount of the video image, and maintain the playing smoothness of the video image. In addition, in the present invention, the ROI is added, deleted, moved, and scaled with additional different gestures, and the image quality from the ROI to the non-ROI is determined in the gradient manner according to the touch pressure of the gesture, so as to provide a preferred visual feeling to the user on the basis of decreasing the data transmission amount.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for adjusting video image compression using a gesture, adapted to compress a video image displayed by an electronic device (20, 30), wherein the electronic device (20, 30) comprises a touch screen (22, 32), the method comprising:

    displaying (S102) the video image on the touch screen (22, 32);
    detecting (S104) a first touch operation executed on the video image by using the touch screen (22, 32), and determining a region of interest (ROI) and a non-ROI according to the first touch operation; and

adjusting (S106) compression methods for the ROI and the non-ROI, and using the adjusted compression methods for compressing the video image in the ROI and the non-ROI.

2. The method for adjusting video image compression using a gesture according to claim 1, wherein before the step of displaying the video image, the method further comprises:

receiving the video image captured by an image capturing device of the electronic device (20, 30), or the video image transferred from a remote device.

3. The method for adjusting video image compression using a gesture according to claim 1 or 2, wherein after the step of determining the ROI and the non-ROI according to the first touch operation, the method further comprises:

transferring (S406) position information of the ROI and the non-ROI to the remote device;
the remote device adjusting (S408) the compression methods for the ROI and the non-ROI according to the position information, and using the adjusted compression methods for compressing the video image in the ROI and the non-ROI; and
the remote device transferring (S410) the compressed video image in the ROI and the non-ROI to the electronic device (20, 30).

4. The method for adjusting video image compression using a gesture according to any one of claims 1 to 3, wherein the step of determining the ROI and the non-ROI according to the first touch operation comprises:

when the first touch operation comprises three touch points (A, B, C), determining a round region (23) by using the three touch points (A, B, C), and dividing the video image into the ROI and the non-ROI by using the round region (23), wherein a range of the round region (23) covers the three touch points (A, B, C).

5. The method for adjusting video image compression using a gesture according to claim 4, wherein the step of dividing the video image into the ROI and the non-ROI by using the round region (23) comprises:

when the three touch points (A, B, C) go inwards or outwards from an original position, determining to use the video image in the round region (23) as the ROI and use the video image out of the round region as the non-ROI, or use the video image out of the round region as the ROI and use the video image in the round region (23) as the non-ROI.

6. The method for adjusting video image compression using a gesture according to any one of claims 1 to 3, wherein the step of determining the ROI (23, 33) and the non-ROI according to the first touch operation comprises:

when the first touch operation comprises four touch points (A', B', C', D'), determining a quadrangular region (33) by using the four touch points (A', B', C', D'), and dividing the video image into the ROI and the non-ROI by using the quadrangular region (33).

7. The method for adjusting video image compression using a gesture according to claim 6, wherein the step of dividing the video image into the ROI and the non-ROI by using the quadrangular region (33) comprises:

when the four touch points (A', B', C', D') go inwards or outwards from an original position, determining to use the video image in the quadrangular region (33) as the ROI and use the video image out of the quadrangular region (33) as the non-ROI, or use the video image out of the quadrangular region (33) as the ROI and use the video image in the quadrangular region (33) as the non-ROI.

8. The method for adjusting video image compression using a gesture according to any one of claims 1 to 7, wherein after the step of determining the ROI and the non-ROI, the method further comprises:

detecting a second touch operation in the ROI; and
when the second touch operation is a single touch point, and the touch point moves after staying in the ROI for more than a preset period of time, moving a position of the ROI on the video image according to displacement of the touch point.

9. The method for adjusting video image compression using a gesture according to any one of claims 1 to 8, wherein after the step of determining the ROI and the non-ROI, the method further comprises:

detecting a third touch operation in the ROI; and
when the third touch operation is two touch points, and the two touch points go inwards or outwards from an original position, scaling a size of the ROI according to displacement of the two touch points.

10. The method for adjusting video image compression using a gesture according to any one of claims 1 to 9, wherein after the step of determining the ROI and the non-ROI, the method further comprises:

detecting a fourth touch operation; and
when the fourth touch operation is a single touch point, and the touch point moves from the outside of the ROI into the ROI and then moves out of the ROI, deleting the determined ROI and the determined non-ROI.

11. The method for adjusting video image compression using a gesture according to any one of claims 1 to 10, wherein the step of adjusting the compression methods for the ROI and the non-ROI, and using the adjusted compression methods for compressing the video image in the ROI and the non-ROI comprises:

compressing the video image in the ROI by using a first compression method with a first quality; and
compressing the video image in the non-ROI by using a second compression method with a second quality, wherein the first quality is higher than the second quality.

12. The method for adjusting video image compression using a gesture according to claim 11, wherein when the video image in the ROI is compressed by using the first compression method, motion estimation is only executed on a plurality of frames of the video image in the ROI, and when the video image in the non-ROI is compressed by using the second compression method, the motion estimation is only executed on a plurality of frames of the video image in the non-ROI.

13. The method for adjusting video image compression using a gesture according to any one of claims 1 to 12, wherein the step of adjusting the compression methods for the ROI and the non-ROI further comprises:

when a plurality of touch points of the first touch operation goes inwards or outwards from an original position, detecting (S508) a touch pressure of each of the touch points; and
defining (S510) the compression methods from the ROI to the non-ROI in a gradient manner according to the touch pressures of the touch points, so that a compression quality of the compressed video image is increasingly improved or deteriorated from the ROI to the non-ROI.

14. The method for adjusting video image compression using a gesture according to claim 13, wherein in the plurality of frames of the video image in the ROI, a difference value of the compression quality between a plurality of macroblocks (MBs) being adjacent in time or space is not greater than a unit quantized value.

15. The method for adjusting video image compression using a gesture according to claim 13, wherein the compression quality comprises a quantization parameter (QP) value and/or a bit rate.

Display a video image on the touch screen — S102

Detect a touch operation executed on the video image by using the touch screen, and determine an ROI and a non-ROI according to the touch operation — S104

Adjust the compression methods for the ROI and the non-ROI, and use the adjusted compression methods for compressing the video image in the ROI and the non-ROI — S106

FIG. 1

FIG. 2A

FIG. 2B

FIG. 3A

FIG. 3B

The electronic device receives a video image from a remote device, and displays the video image on the touch screen. — S402

The electronic device detects a touch operation executed on the video image by using a touch screen, and determines an ROI and a non-ROI according to the touch operation. — S404

The electronic device converts the ROI and the non-ROI into position information, and transfers the position information to a remote device. — S406

The remote device adjusts compression methods for the ROI and the non-ROI according to the position information, and uses the adjusted compression methods for compressing the video image in the ROI and the non-ROI. — S408

The remote device transfers the compressed video image in the ROI and the non-ROI to the electronic device. — S410

The electronic device de-compresses and displays the video image in the ROI and the non-ROI. — S412

FIG. 4

Display a video image on the touch screen — S502

Detect a touch operation executed on the video image by using a touch screen, and determine an ROI and a non-ROI according to the touch operation — S504

Continue to detect changes of the touch operation by using the touch screen — S506

When a plurality of touch points of the touch operation goes inwards or outwards from an original position, detect a touch pressure of each touch point — S508

Define compression methods from the ROI to the non-ROI in a gradient manner according to the detected touch pressure of the touch point, so that a compression quality of the video image is increasingly improved or deteriorated from the ROI to the non-ROI — S510

FIG. 5

| | | | | |
|---|---|---|---|---|
| | | | | |
| | $i-w-1$ | $i-w$ | $i-w+1$ | |
| | $i-1$ | $i$ | $i+1$ | |
| | $i+w-1$ | $i+w$ | $i+w+1$ | |
| | | | | |

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 100137707